# EUROPEAN PATENT SPECIFICATION

(11) **EP 3 889 472 B1**
(45) Date of publication and mention of the grant of the patent: **19.06.2024**
(21) Application number: 20167768.9
(22) Date of filing: 02.04.2020
(51) Int. Cl.: F16J 9/16

(54) **PISTON RING PACKAGE**
KOLBENRINGPAKET
ENSEMBLE DE SEGMENTS DE PISTON

(43) Date of publication of application: 06.10.2021
(73) Proprietor: Winterthur Gas & Diesel Ltd., 8401 Winterthur (CH)
(72) Inventor: Räss, Konrad, 8457 Humlikon (CH)
(74) Representative: Hepp Wenger Ryffel AG

(56) References cited:
- EP-A1- 0 069 175
- EP-A1- 0 942 204
- DE-A1-102017 118 773
- JP-A- 2013 151 995
- JP-B2- 6 062 382

## Description

The invention relates to a piston ring package for a piston of a reciprocating internal combustion engine according to the generic term of claim 1, a piston with such a piston ring package, a reciprocating internal combustion engine with such a piston.

The present invention preferably relates to an internal combustion engine like a large marine or ship engine or a stationary engine whose cylinders have an inner diameter of at least 200 mm. The engine preferably is a two-stroke engine or a two-stroke cross head engine. The engine can be a diesel or a gas engine, a dual fuel or a multi fuel engine. Burning of liquid and or gaseous fuels in such engines is possible as well as self-igniting or forced igniting.

The internal combustion engine can be a longitudinally flushed two-stroke engine.

The term internal combustion engine also refers to large engines which can be operated not only in diesel mode, which is characterized by the self-ignition of the fuel, but also in Otto mode, which is characterized by the positive ignition of the fuel, or in mixtures of the two. Furthermore, the term internal combustion engine includes in particular dual-fuel engines and large engines in which the self-ignition of the fuel is used for the positive ignition of another fuel.

Engine speed is preferably below 800 RPM, especially for 4-stroke engines, and more preferably below 200 RPM, especially for 2-stroke engines, which indicates the designation of low speed engines.

Fuel can be diesel or marine diesel oils or heavy fuel oils or emulsions or slurries or methanol or ethanol as well as gases like liquid natural gas (LNG) liquid petrol gas (LPG) and so on.

Further possible fuels which might be added on request are: LBG (Liquefied Biogas), biological fuels (e. g. oil made from algae or seaweed), ammonia, hydrogen, synthetic fuels from CO2 (e. g. made by Power-To-Gas or Power-To-Liquid).

Large ships, in particular vessels for transport of goods, usually are powered by internal combustion engines, in particular diesel and/or gas engines, mostly two-stroke, cross head engines.

The pistons of reciprocating piston internal combustion engines, in particular reciprocating piston internal combustion engines of the dual-fuel or Otto-cycle type, are provided with piston rings forming a piston ring package which are seated in grooves in the piston and serve to seal the combustion chamber off from the outside.

At least the top ring of the piston ring package is cut to allow expansion of the piston ring at the mounting in a ring groove in the side wall of the piston. Typically the two ends of the ring at the cut are designed to form locking ends, so that the gas in the combustion chamber of the cylinder is substantially prevented from flowing through the cut.

The two locking ends of the top ring may have mutually overlapping tongues which bar at least the major part of the ring gap and restrict the possibility of the combustion gases of flowing through the ring gap.

Such a top piston ring is for example disclosed in the application EP 20167735.8 which is incorporated herein by reference.

DE 10 2017 118 773 A1 discloses a piston ring package comprising three piston rings: an upper or combustion chamber side compression ring and a lower or crankcase side compression ring, and a central oil scraper ring disposed between the upper compression ring and the lower compression ring. The compression rings have a small clearance in order to achieve a good seal and to minimize blowby.

The upper compression ring may be the same as the lower compression ring in terms of dimensions and other mechanical properties. This allows a reduced number of different components to be achieved.

According to DE 10 2017 118 773 A1 a pressurised oil reservoir shall be created between the upper and lower compression rings, the average pressure of which corresponds approximately to the average value between the pressure in the crankcase and the average pressure in the combustion chamber. According to DE 10 2017 118 773 A1 the top piston ring and the bottom ring are arranged in parallel and essentially provide a sealing towards the piston underside space.

EP0069175A1 discloses a sealing structure of a piston, in which two piston rings are disposed within a groove. One of the piston rings is adapted to introduce lubricant oil into the groove during the piston up-stroke and the other ring is adapted to introduce the oil into the groove in the piston downstroke.

EP0942204 A1 shows a piston sealing ring assembly including a first and second cut piston sealing ring each bounded by first and second planar surfaces, the first piston sealing ring having an overlapped cut with generally circumferentially extending inner and outer overlapping portions which contact each other to form a continuous seal extending from the first surface to the second surface of the first piston sealing ring. The periphery of the outer ring gap of the first piston sealing ring at the first surface is sealed by the second surface of the second piston sealing ring. The second piston sealing ring is similarly disposed in relation to the first piston sealing ring so its outer ring gap is sealed at the second surface by the first surface of the first piston sealing ring.

For the purpose of reducing the ring wear of the upper piston ring a controlled leakage of gas escaping from the combustion chamber may be permitted as disclosed for example in EP0742875 B1. According to DE 102010020490 B4 the permitted leakage decreases from the piston ring closest to the combustion chamber to the piston ring furthest away from the combustion chamber.

During each piston stroke, the piston ring assembly is exposed from above to the combustion pressure generated in the combustion chamber bounded by the piston and from below to the pressure existing below the piston.

There is the risk that a pressure from below, that is from the piston underside space, affects the piston rings, for example such that the top piston ring is lifted from the lower wall of the piston ring groove, in particular during downward movement of the piston in axial direction towards the crankcase. Thus a leakage may be permitted in the direction towards the combustion chamber. Oil may be passed in to the combustion chamber and deposits may be generated at the liner.

The invention is based on the task of providing a piston ring package, a piston with such a piston ring package, a reciprocating internal combustion engine with such a piston, which avoids the disadvantages of the known, which in particular provides for a sufficient sealing and an easy manufacturing.

The object is achieved by the characteristics of the independent claims.

According to the invention the piston ring package for a piston of an internal combustion engine comprises at least a first piston ring and a second piston ring.

The first piston ring is arranged such that it gas tight towards a pressure from a first axial side of the piston ring package and the second piston ring is arranged such that it gastight towards a pressure from a second axial side opposite to the first axial side.

Hence the piston ring package provides a gas tightness towards both of the axial sides of the piston ring package.

The first axial side may correspond to the direction facing the combustion chamber; the second axial side may correspond to the direction facing the piston underside space.

While the first piston ring preferably is adapted to avoid combustion gas entering the space below the piston ring, the second piston ring prevents pressure from below the piston affecting the first piston ring, in particular during downward movement of the piston towards the crankcase.

The first and the second piston rings may have the same locking mechanism, but arranged towards opposite axial sides.

The first piston ring and the second piston ring may have different heights and/or different profiles. The second piston ring may have a smaller height than the first piston ring.

In a preferred embodiment of the piston ring package, the first piston ring is equal to the second piston ring.

The first and the second piston ring hence have the same geometry. The first and the second piston ring are equal in terms of dimensions and other mechanical properties. However, the piston rings are arranged differently in the piston package.

The first piston ring may comprise a piston ring lock which is gastight gas tight towards a pressure from the first axial side.

The second piston ring may comprise the same piston ring lock as the first piston ring. When arranged as a piston ring package, the second piston ring is arranged axially in the opposite direction to the first piston ring, such that the piston ring lock is gas tight towards the second axial side.

Thus, gas tightness towards two different axial sides of the piston ring package is provided by two equal piston rings.

The first and the second piston ring may be cambered.

The contact line of the piston ring with the cylinder regularly is defined by the maximally extending line of the cambering, which for piston ring locks with a male and a female locking end preferably is arranged on the male locking end.

Preferably the maximally extending line of the cambering is positioned in axial direction in the middle of the height of the piston ring.

Alternatively the maximally extending line may divide the height of the piston ring into a smaller part and a larger part, such as one quarter and three quarters of the height. Preferably the cambering of the first piston ring is arranged, such that the smaller part tends towards the second axial side, whereas the cambering of the second piston ring is arranged such that the smaller part tends towards the first axial side.

Advantageously the first piston ring comprises a lock section with a male locking end and a female locking end.

The first piston ring may comprise a ring section and a lock section with a female and a male locking end. An outer side of the top ring is in contact with a cylinder liner.

The male locking end has a projecting tongue projecting into a corresponding recess at the female locking end.

In the radial direction, the tongue is smaller than the ring section, and the recess is delimited at the inner side of the first piston ring by a vertical wall abutting the inner side of the tongue. The axial height of the tongue is smaller than the axial height of the ring section, and the recess is in axial direction delimited by a projecting wall. The side of the projecting wall facing the second axial side abuts the side of the tongue facing the first axial side. Hence, the recess is open towards the second axial side.

As the tongue essentially fills out the recess in the directions of width and height, the combustion gases are substantially prevented from flowing through the cut, whether or not the tongue is spaced from the bottom of the recess in the circumferential direction. The distance between the tongue and the bottom of the recess in the circumferential direction varies due to the expansion of the piston ring depending on thermal conditions.

Alternatively or additionally the second piston ring comprises a ring section and a lock section with a male locking end and a female locking end.

The male locking end comprises at least one projecting tongue projecting into a corresponding recess at the female locking end.

In the radial direction, the tongue is smaller than the ring section, and the recess is delimited at the inner side of the second piston ring by a vertical wall abutting the inner side of the tongue. The axial height of the tongue is smaller than the axial height of the ring section, and the recess is in axial direction delimited by a projecting wall. The side of the projecting wall facing the first axial side abuts the side of the tongue facing the second axial side. The recess is open towards the first axial side.

The lock section of the second piston ring withstands pressure acting from the second axial side towards the piston ring package.

Preferably the locking ends of the first and the second piston ring are equal in terms of in terms of dimensions.

In a beneficial embodiment the first piston ring is a top piston ring and/or the second piston ring is a bottom piston ring. Hence the first piston ring is the piston ring of the piston ring package nearest to the combustion chamber, and the second piston ring is the piston ring positioned furthest from the combustion chamber.

The piston ring package may comprise at least one further piston ring.

At least one further piston ring may be an oil distributor ring arranged between the first piston ring and the second piston ring and/or next to the second piston ring on the side of the second ring facing away from the first ring.

The oil distributor ring may comprise oil scraper blades for creating a defined oil film in the inner surface of the cylinder and for removing excess oil, for example via drainage channels in the piston.

At least one further piston ring may be a gas tight piston ring, arranged between the first piston ring and the second piston ring and arranged such that it is gas tight towards a pressure from the first axial side of the piston ring package. The further piston ring may be equal to the first piston ring and may be arranged in the same way. The further piston ring provides an additional barrier in cases wherein gas gets through the first piston ring.

At least one further piston ring may be a gas tight piston ring, arranged between the first piston ring and the second piston ring and arranged such that it is gas tight towards a pressure from the second axial side of the piston ring package. The further piston ring strengthens the function of the second piston ring.

At least one further piston ring may be a non-gas tight piston ring.

At least one further piston ring may be different from the first and/or the second piston ring in terms of dimensions. The further piston ring may comprise a different height or may comprise a different profile.

A further piston ring may comprise a straight lock.

The piston ring package may comprise a combination of different types of piston rings.

The object is also achieved by a piston for an internal combustion engine comprising a piston ring package as described above.

The object is also achieved by a combustion engine comprising a piston as described above.

Further advantageous aspects of the invention are explained in the following by means of exemplary embodiments and the figure. In the drawing, in a schematic manner:
- Figure 1:: shows a schematic illustration of a first example of a piston ring package;
- Figure 2:: shows a schematic illustration of a piston according to the first example in a sectional view;
- Figure 3:: shows a schematic illustration of a second example of a piston in a sectional view;
- Figure 4:: shows a schematic illustration of a third example of a piston in a sectional view;
- Figure 5:: shows a schematic illustration of a fourth example of a piston in a sectional view;
- Figure 6:: shows a schematic illustration of a fifth example of a piston in a sectional view;
- Figure 7:: shows a schematic illustration of a sixth example of a piston in a sectional view.

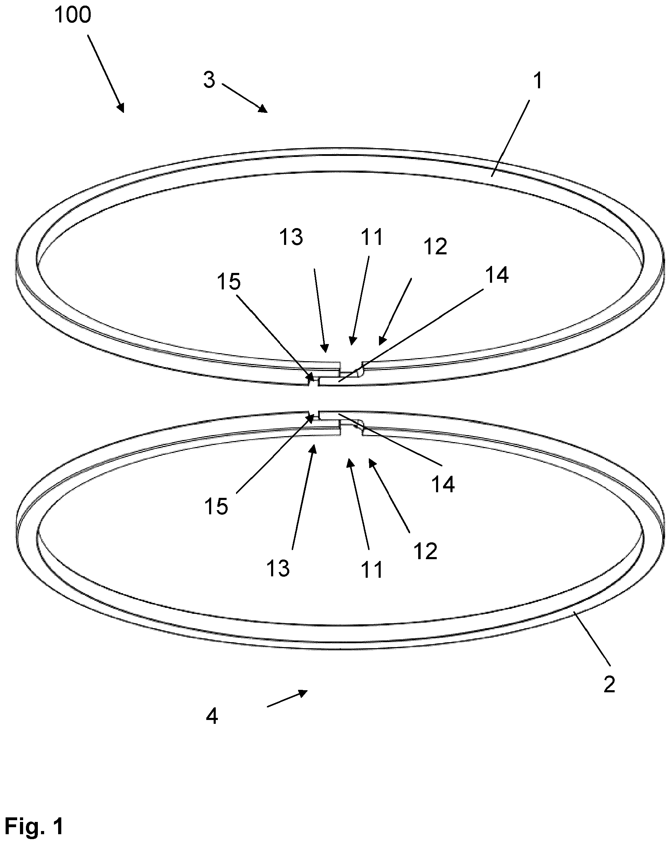

Figure 1 shows a schematic illustration of a first example of a piston ring package 100. The piston ring package 100 comprises a first piston ring 1 and a second piston ring 2.

The first piston ring 1 is arranged such that it gas tight towards a pressure from a first axial side 3 of the piston ring package 100 and the second piston ring 2 is gastight towards a pressure from a second axial side 4 opposite to the first axial side 3.

The first piston ring 1 comprises a lock section 11 with a male locking end 12 and a female locking end 13. The male locking 12 end comprises at least one projecting tongue 14 projecting into a corresponding recess 15 at the female locking end 13.

The recess 15 is open towards the second axial side 4.

The second piston ring 2 is equal to the first piston ring 1 in terms of dimensions, but is arranged the lowest on the top.

The second piston ring 2 also comprises a lock section 11 with a male locking end 12 and a female locking end 13. The male locking end 12 comprises at least one projecting tongue 14 projecting into a corresponding recess 15 at the female locking end 13.

As the second piston ring is arranged differently form the first piston ring 1, the recess 15 of the second piston ring 2 is open towards the first axial side 3.

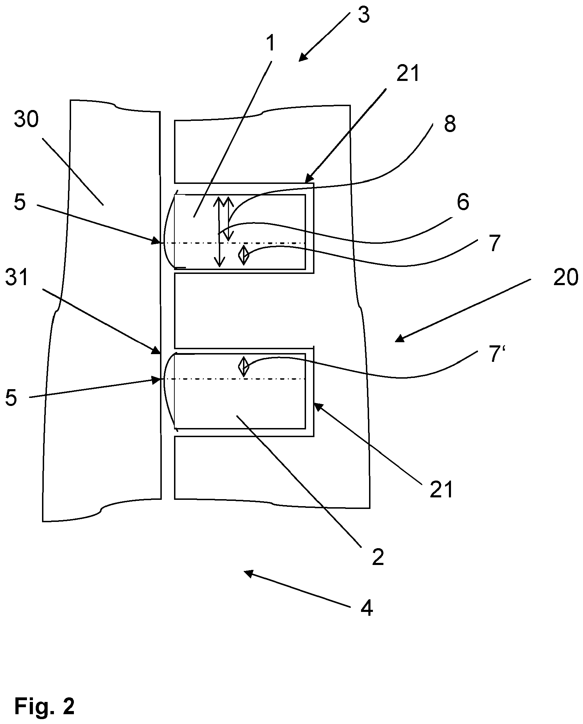

Figure 2 shows a schematic illustration of a piston 20 according to the first example in a sectional view.

The piston 20 comprises two grooves 21, one for the first piston ring 1 forming a top piston ring and one for a second piston ring 2 forming a bottom piston ring.

The piston rings 1, 2 are cambered. The contact line of the piston ring 1, 2 with the liner 31 of the cylinder 30 is defined by the maximally extending line 5 of the cambering.

The maximally extending line 5 of the cambering divides the total height 6 of the piston ring 1, 2 into a smaller part 7 and a larger part 8. The smaller part 7 of the first piston ring 1 tends towards the second axial side 4.

As the second piston ring 2 is arranged the other way round, the smaller part 7' of the second piston ring 2 tends towards the first axial side 3.

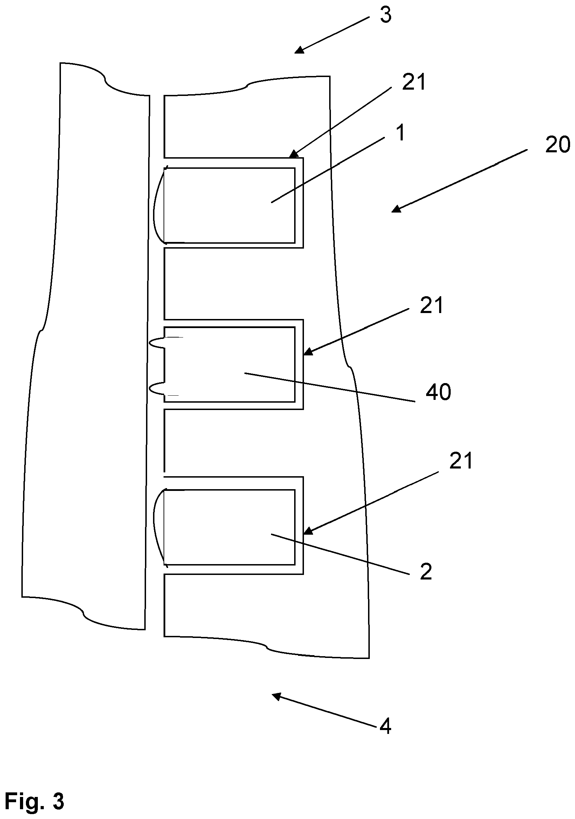

Figures 3-6 show a schematic illustration of a second, third, fourth and fifth example of a piston 20 in a sectional view.

The piston 20 comprises three grooves 21.

A first piston ring 1 is arranged such that it gas tight towards a pressure from a first axial side 3 and a second piston ring 2 is arranged such that it gas tight towards a pressure from a second axial side 4.

As shown in figure 3, an oil distributor ring 40 is arranged between the first piston ring 1 and the second piston ring 2.

The oil distributor ring 40 may be arranged to guide excess oil towards the second axial side.

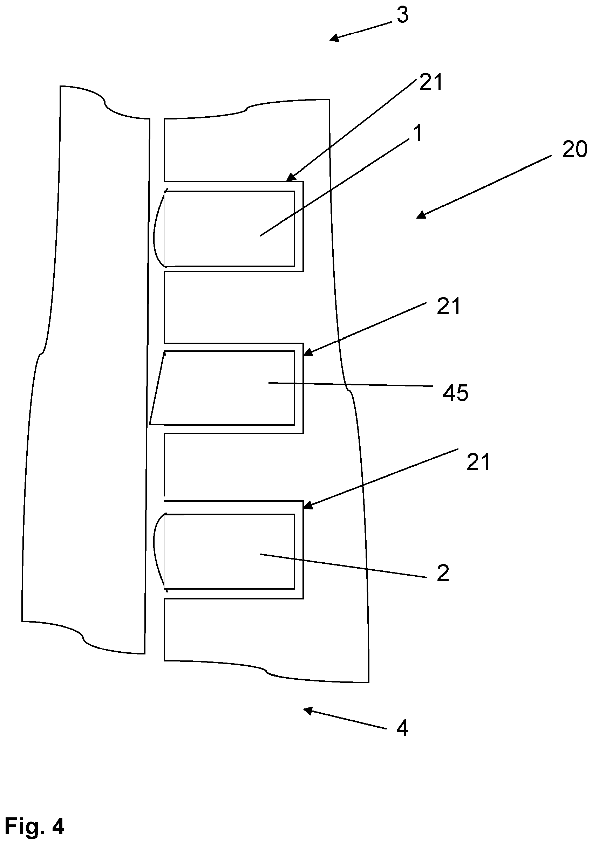

As shown in figure 4 a further piston ring 45, which may have a straight lock, is arranged between the first piston ring 1 and the second piston ring 2. Alternatively the further piston ring 45 may have a male and a female locking end. Alternatively the further piston ring 45 may be cambered.

The further piston ring 45 may also be cambered or may have a straight external profile.

Alternatively the piston 20 may comprise four grooves (not explicitly shown in the figures), such that between a first piston ring 1 being arranged such that it gas tight towards a pressure from a first axial side 3 and a second piston ring 2 being arranged such that it gas tight towards a pressure from a second axial side 4, there are arranged an oil distributor ring 40 and a further piston ring 45.

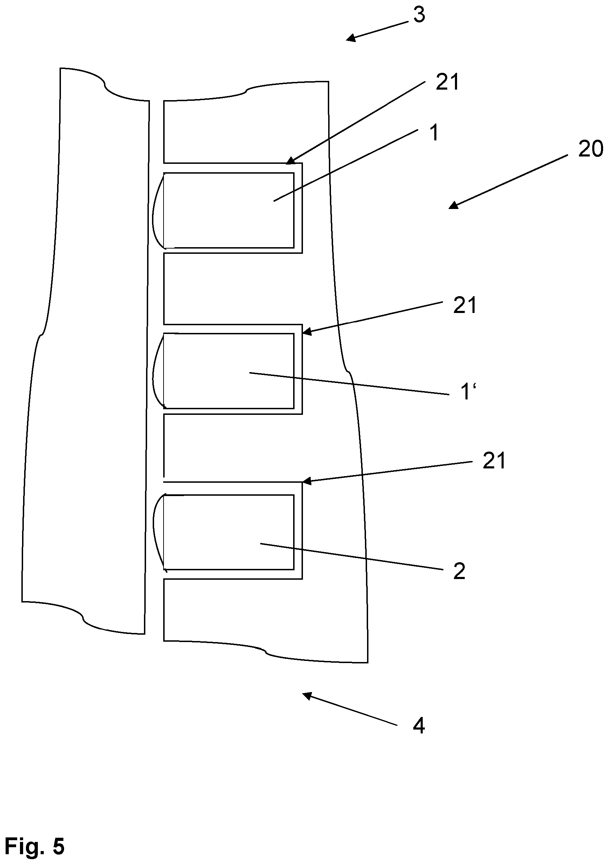

As shown in figure 5 a further first piston ring 1' being arranged such that it gas tight towards a pressure from a first axial side 3 is arranged between the first piston ring 1 and the second piston ring 2.

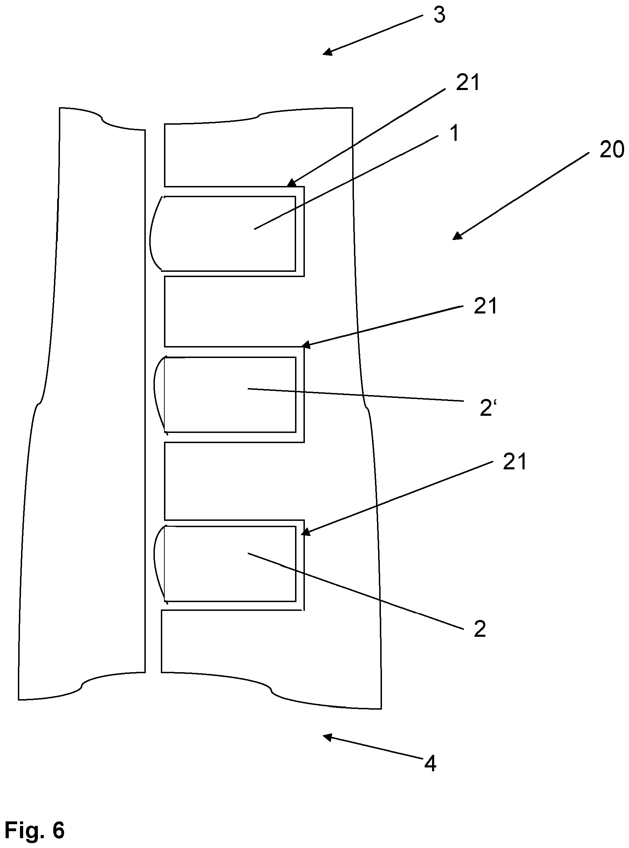

As shown in figure 6 a further second piston ring 2' being arranged such that it gas tight towards a pressure from a second axial side 4 is arranged between the first piston ring 1 and the second piston ring 2.

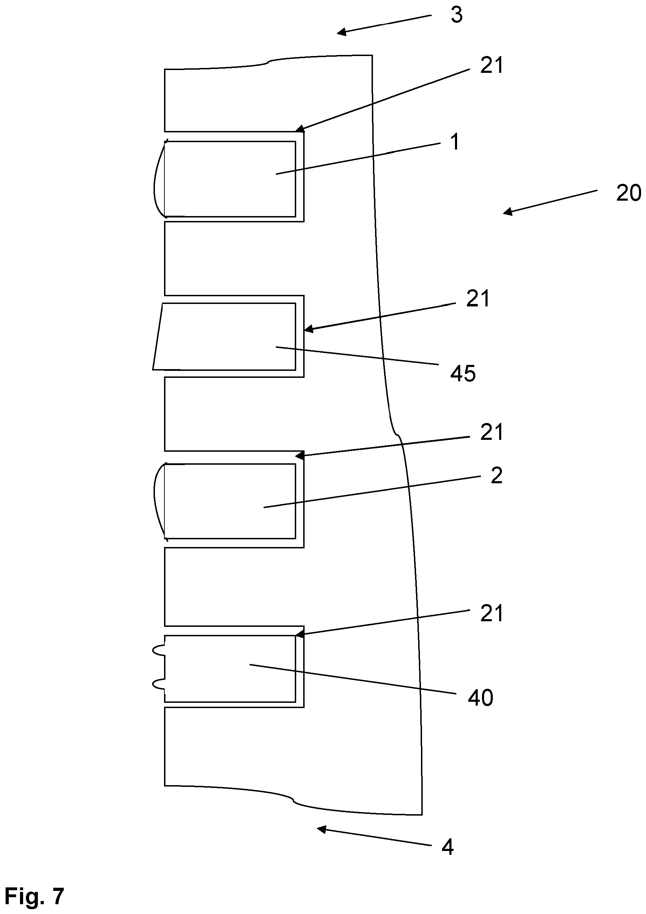

Figure 7 shows a schematic illustration of a sixth example of a piston 20 in a sectional view. The piston 20 comprises four grooves 21.

Below a first piston ring 1 being arranged such that it gas tight towards a pressure from a first axial side 3 and a second piston ring 2 being arranged such that it gas tight towards a pressure from a second axial side 4, there is arranged an oil distributor ring 40.

Additionally, between the first piston ring 1 and the second piston ring 1 there may be arranged a further piston ring 45.

Alternatively, between the first piston ring 1 and the second piston ring 1 there may be arranged a further first piston ring 1', a further second piston ring 2' and/or a further oil distributor ring 40 (not shown in the figures).

## Claims

1. A piston ring package (100) for a piston of an internal combustion engine comprising at least a first piston ring (1) and a second piston ring (2),
**characterized in that**
the first piston ring (1) is arranged such that it is gas tight towards a pressure from a first axial side (3) of the piston ring package (100) and the second piston ring (2) is gastight towards a pressure from a second axial side (4) opposite to the first axial side (3), **characterised in that**
the first piston ring (1) comprises a lock section (11) with a male locking end (12) and a female locking end (13), the male locking (12) end comprising at least one projecting tongue (14) projecting into a corresponding recess (15) at the female locking end (13), the recess (15) being open towards the second axial side (4) and
wherein the second piston ring (2) comprises a lock section (11) with a male locking end (12) and a female locking end (13'), the male locking end (12) comprising at least one projecting tongue (14) projecting into a corresponding recess (15) at the female locking end (13), the recess (15) being open towards the first axial side (3).

2. The piston ring package according to claim 1, wherein the first piston ring (1) is equal to the second piston ring (2) .

3. The piston ring package according to at least one of the preceding claims,
wherein
the first piston ring (1) is a top piston ring
and/or
the second piston ring (2) is a bottom piston ring.

4. The piston ring package according to at least one of the preceding claims,
wherein the piston ring package (100) comprises at least one further piston ring (40, 45), in particular an oil distributor ring (40).

5. The piston ring package according to claim 4, wherein at least one further piston ring (40) is an oil distributor ring (40) arranged between the first piston ring (1) and the second piston ring (2)
and/or next to the second piston ring (2) on the side of the second ring (2) facing away from the first ring (1).

6. The piston ring package according to claim 4 or 5, wherein at least one further piston ring (45, 1') is a gas tight piston ring, arranged between the first piston ring (1) and the second piston ring (2) and
arranged such that it is gas tight towards a pressure from the first axial side (3) of the piston ring package (100).

7. The piston ring package according to one of claims 4 to 6, wherein at least one further piston ring is a gas tight piston ring (45, 2'), arranged between the first piston ring (1) and the second piston ring (2) and
arranged such that it is gas tight towards a pressure from the second axial side (4) of the piston ring package (100).

8. Piston (20) for an internal combustion engine comprising a piston ring package (100) according at least one of the preceding claims.

9. Combustion engine comprising a piston (20) according to claim 8.

## Patentansprüche

1. Kolbenringpaket (100) für einen Kolben eines Verbrennungsmotors mit mindestens einem ersten Kolbenring (1) und einem zweiten Kolbenring (2),
**dadurch gekennzeichnet, dass**
der erste Kolbenring (1) so angeordnet ist, dass er gegenüber einem Druck von einer ersten axialen Seite (3) des Kolbenringpakets (100) gasdicht ist und der zweite Kolbenring (2) gegenüber einem Druck von einer zweiten axialen Seite (4), die der ersten axialen Seite (3) gegenüberliegt, gasdicht ist, **dadurch gekennzeichnet, dass**
der erste Kolbenring (1) einen Verriegelungsabschnitt (11) mit einem männlichen Verschlussende (12) und einem weiblichen Verschlussende (13) aufweist, wobei das männliche Verschlussende (12) mindestens eine vorstehende Zunge (14) aufweist, die in eine entsprechende Ausnehmung (15) am weiblichen Verschlussende (13) ragt,
wobei die Ausnehmung (15) zur zweiten axialen Seite (4) hin offen ist
und
wobei der zweite Kolbenring (2) einen Verriegelungsabschnitt (11) mit einem männlichen Verschlussende (12) und einem weiblichen Verschlussende (13') umfasst, wobei das männliche Verschlussende (12) mindestens eine vorstehende Zunge (14) umfasst, die in eine entsprechende Aussparung (15) an dem weiblichen Verschlussende (13) hineinragt, wobei die Aussparung (15) zur ersten axialen Seite (3) hin offen ist.

2. Kolbenringpaket nach Anspruch 1, wobei der erste Kolbenring (1) gleich dem zweiten Kolbenring (2) ist.

3. Kolbenringpaket nach mindestens einem der vorhergehenden Ansprüche,
wobei
der erste Kolbenring (1) ein oberer Kolbenring ist und/oder
der zweite Kolbenring (2) ein unterer Kolbenring ist.

4. Kolbenringpaket nach mindestens einem der vorhergehenden Ansprüche,
wobei das Kolbenringpaket (100) mindestens einen weiteren Kolbenring (40, 45), insbesondere einen Ölverteilerring (40), umfasst.

5. Kolbenringpaket nach Anspruch 4, wobei der mindestens eine weitere Kolbenring (40) ein Ölverteilerring (40) ist, der zwischen dem ersten Kolbenring (1) und dem zweiten Kolbenring (2)
und/oder neben dem zweiten Kolbenring (2) auf der vom ersten Ring (1) abgewandten Seite des zweiten Rings (2) angeordnet ist.

6. Kolbenringpaket nach Anspruch 4 oder 5, wobei mindestens ein weiterer Kolbenring (45, 1') ein gasdichter Kolbenring ist, der zwischen dem ersten Kolbenring (1) und dem zweiten Kolbenring (2) angeordnet und gegenüber einem Druck von der ersten axialen Seite (3) des Kolbenringpakets (100) gasdicht angeordnet ist.

7. Kolbenringpaket nach einem der Ansprüche 4 bis 6, wobei mindestens ein weiterer Kolbenring ein gasdichter Kolbenring (45, 2') ist, der zwischen dem ersten Kolbenring (1) und dem zweiten Kolbenring (2) angeordnet und gegenüber einem Druck von der zweiten axialen Seite (4) des Kolbenringpaketes (100) gasdicht angeordnet ist.

8. Kolben (20) für eine Brennkraftmaschine mit einem Kolbenringpaket (100) nach mindestens einem der vorhergehenden Ansprüche.

9. Verbrennungsmotor mit einem Kolben (20) nach Anspruch 8.

## Revendications

1. Ensemble de segments de piston (100) pour un piston de moteur à combustion interne comprenant au moins un premier segment de piston (1) et un second segment de piston (2), **caractérisé en ce que**
le premier segment de piston (1) est agencé de manière à être étanche au gaz vis-à-vis d'une pression provenant d'un premier côté axial (3) de l'ensemble de segments de piston (100) et le second segment de piston (2) est étanche au gaz vis-à-vis d'une pression provenant d'un second côté axial (4) opposé au premier côté axial (3), **caractérisé en ce que** le premier segment de piston (1) comprend une section verrouillage (11) avec une extrémité de verrouillage mâle (12) et une extrémité de verrouillage femelle (13), l'extrémité de verrouillage mâle (12) comprenant au moins une languette saillante (14) faisant saillie dans un évidement correspondant (15) au niveau de l'extrémité de verrouillage femelle (13), l'évidement (15) étant ouvert vers le second côté axial (4)
et
dans lequel le deuxième segment de piston (2) comprend une section de verrouillage (11) avec une extrémité de verrouillage mâle (12) et une extrémité de verrouillage femelle (13'), l'extrémité de verrouillage mâle (12) comprenant au moins une languette saillante (14) faisant saillie dans un évidement correspondant (15) à l'extrémité de verrouillage femelle (13), l'évidement (15) étant ouvert vers le premier côté axial (3).

2. Ensemble de segments de piston selon la revendication 1, dans lequel le premier segment de piston (1) est égal au second segment de piston (2).

3. Ensemble de segments de piston selon au moins l'une des revendications précédentes, dans lequel le premier segment de piston (1) est égal au second segment de piston (2),
dans lequel
le premier segment (1) est un segment supérieur et/ou
le second segment (2) est un segment inférieur.

4. Ensemble de segments de piston selon au moins l'une des revendications précédentes,
dans lequel l'ensemble de segments de piston (100) comprend au moins un autre segment de piston (40, 45), en particulier un segment de distribution d'huile (40).

5. Ensemble de segments de piston selon la revendication 4, dans lequel au moins un autre segment de piston (40) est un segment de distribution d'huile (40) disposé entre le premier segment de piston (1) et le second segment de piston (2)
et/ou à côté du second segment de piston (2) sur le côté du second segment (2) opposé au premier segment (1).

6. Ensemble de segments de piston selon la revendication 4 ou 5, dans lequel au moins un autre segment de piston (45, 1') est un segment de piston étanche aux gaz, disposé entre le premier segment de piston (1) et le second segment de piston (2) et disposé de manière à être étanche au gaz vis-à-vis d'une pression provenant du premier côté axial (3) de l'ensemble de segments de piston (100).

7. Ensemble de segments de piston selon l'une des revendications 4 à 6, dans lequel au moins un autre segment de piston est un segment de piston étanche aux gaz (45, 2'), disposé entre le premier segment de piston (1) et le second segment de piston (2) et disposé de manière à être étanche au gaz vis-à-vis d'une pression provenant du deuxième côté axial (4) de l'ensemble de segments de piston (100).

8. Piston (20) pour moteur à combustion interne comprenant un ensemble de segments de piston (100) selon au moins l'une des revendications précédentes.

9. Moteur à combustion comprenant un piston (20) selon la revendication 8.
